# EUROPÄISCHE PATENTSCHRIFT

(11) **EP 1 859 971 B1**
(45) Veröffentlichungstag und Bekanntmachung des Hinweises auf die Patenterteilung: **17.11.2010**
(21) Anmeldenummer: 07004848.3
(22) Anmeldetag: 09.03.2007
(51) Int. Cl.: B60G 17/005, B60G 15/06, F16F 9/58

(54) **Vorrichtung zum Blockieren eines Federbeins eines Kraftfahrzeugs**
Device for blocking the suspension strut of a motor vehicle
Dispositif de blocage d'une jambe de suspension d'un véhicule automobile

(30) Priorität: 24.05.2006 DE 102006024268
(43) Veröffentlichungstag der Anmeldung: 28.11.2007
(73) Patentinhaber: Dr. Ing. h.c. F. Porsche AG, 70435 Stuttgart (DE)
(72) Erfinder: Schulz, Achim, 75223 Niefern-Oeschelbronn (DE)

(56) Entgegenhaltungen:
- EP-A2- 1 498 636
- DE-C1- 19 751 215
- JP-A- 6 081 886
- US-A- 3 591 161

## Beschreibung

Die vorliegende Erfindung betrifft eine Vorrichtung zum Blockieren eines Federbeins eines Kraftfahrzeugs zum Transport des Kraftfahrzeugs gemäß dem Oberbegriff des Anspruchs 1.

Beim Transport von Fahrzeugen ist es üblich, die Federwirkung der Federbeine außer Kraft zu setzen, indem beispielsweise Distanzelemente zwischen den einzelnen Windungen der Feder des Federbeins eingeklemmt werden und dadurch deren Federweg begrenzen.

Die EP 1 498 636 A2 beschreibt eine Vorrichtung der eingangs genannten Art, wobei vorgeschlagen wird, ein Distanzelement zum Blockieren einer Radaufhängung als geschlitzte Kunststoffhülse auszuführen, welche für Transportzwecke an der Kolbenstange eingeclipst werden kann.

Auch die JP 06 081 886 A befasst sich mit einem Abstandselement zum Blockieren eines Federbeins beim Transport von Kraftfahrzeugen.

Aus der DE 197 51 215 C1 ist eine Vorrichtung zum Blockieren einer Feder in einem Federbein bekannt, bei der ein Distanzelement zum Transport eines Fahrzeugs vorgesehen ist. Das Distanzelement besteht dabei aus mindestens einem in die Feder einclipsbaren Segment aus einem hartelastischen Kunststoff, welches sich mit seinem unteren, freien Ende an einem Federteller des Federbeins abstützt. Ein Einclipsen in die Windungen der Feder erfolgt dabei in eine oder mehrere Lager-Aufnahmen des Segments dahingehend, dass eine obere Aufnahme als Einfädel-Aufnahme dient und das Segment um diese Lagerung auf den ortsfesten Federteller des Federbeins verschwenkt wird und sich darauf abstützt.

Eine weitere Vorrichtung zum Blockieren eines Federbeins ist beispielsweise aus der US 3,591,161 bekannt.

Die vorliegende Erfindung beschäftigt sich mit dem Problem, für eine Vorrichtung zum Blockierten eines Federbeins eines Kraftfahrzeugs der gattungsgemäßen Art eine verbesserte oder zumindest eine andere Ausführungsform anzugeben.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, bei einer gattungsgemäßen Vorrichtung zum Blockieren eines Federbeins eines Kraftfahrzeugs Distanzkörper vorzusehen, wobei diese Distanzkörper im wesentlichen C-förmig ausgebildet sind und bei am Federbein montierter Vorrichtung radial innerhalb einer Schraubenfeder des Federbeins angeordnet sind und mit ihrer C-förmigen Gestalt einen Axialabschnitt einer Dämpfereinrichtung des Federbeins umgreifen. Die Vorrichtung kann dabei mehrere Distanzkörper aufweisen, welche in axialer Richtung des Federbeins nebeneinander angeordnet werden und dadurch eine genaue Begrenzung des maximal zur Verfügung stehenden Federwegs erlauben. Die Schraubenfeder des Federbeins ist dabei üblicherweise zwischen zwei Federtellern angeordnet und umgreift bzw. umrundet zumindest einen Axialabschnitt der Dämpfereinrichtung. Durch die erfindungsgemäße Lösung ist es möglich, das Federbein hinsichtlich seines Federwegs einfach zu begrenzen, indem entsprechende Distanzkörper zwischen den einzelnen Windungen der Schraubenfeder hindurchgeschoben werden und anschließend in Eingriff mit der Dämpfereinrichtung gebracht werden.

Zweckmäßig ist eine Höhe eines Distanzkörpers kleiner als eine lichte Weite zwischen zwei Windungen der Schraubenfeder in axialer Richtung derselben in Neutralstellung des Federbeins. Dies ermöglicht ein problemloses radiales Einführen der Distanzkörper durch die zwischen den Windungen der Schraubenfeder verbleibenden Abstände, wodurch sich eine Montage der Distanzkörper am Federbein besonders einfach gestaltet.

Erfindungsgemäß weist die Vorrichtung ein am Distanzkörper angeordnetes Griffelement auf, welches bei am Federbein angebrachter Vorrichtung radial nach außen durch die Schraubenfeder ragt. Ein derartiges Griffelement, welches beispielsweise in Form einer Schlaufe oder ein Reißlasche ausgebildet ist, erleichtert das Entfernen des Distanzkörpers nach dem Transport des Fahrzeugs und erübrigt ein aufwändiges und handwerklich schwieriges Hindurchgreifen durch die Abstände zwischen den einzelnen Windungen der Schraubenfeder. Gleichzeitig erlaubt ein derartiges Griffelement eine leichte Handhabung des Distanzkörpers, wodurch sich dessen Handling auch im nicht montierten Zustand vereinfacht.

Zweckmäßig ist der Distanzkörper aus Kunststoff ausgebildet. Ein aus Kunststoff ausgebildete Distanzkörper lässt sich in nahezu jeder beliebigen Form und zudem kostengünstig herstellen. Gleichzeitig kann durch die Beeinflussung der Materialeigenschaften des Kunststoffs Einfluss auf die Elastizität des Kunststoffs und damit auf den maximal zulässigen Federweg genommen werden.

Bei einer weiteren vorteilhaften Ausführungsform der erfindungsgemäßen Lösung ist der Distanzkörper axial stapelbar ausgebildet, wobei darüber hinaus denkbar ist, dass er formschlüssig stapelbar ist. Eine derartige formschlüssige Stapelbarkeit erleichtert einerseits die Lagerung der Distanzkörper im Nichtgebrauchszustand und sichert andererseits eine exakte Positionierung der Distanzkörper am Federbein im montierten Zustand. Eine formschlüssige Stapelbarkeit kann dabei beispielsweise über eine entsprechende komplementäre Ausbildung einander zugewandter Seiten der Distanzkörper erreicht werden.

Bei einer besonders bevorzugten Ausführungsform der erfindungsgemäßen Lösung ist der C-förmige Distanzkörper so ausgebildet, dass er den Axialabschnitt der Dämpfereinrichtung um mehr als 180° umgreift. Dies bewirkt eine selbstsichernde Lage des Distanzkörpers am Axialabschnitt der Dämpfereinrichtung und gewährleistet einen zuverlässigen Halt der Distanzkörper am Federbein während des Transport des Kraftfahrzeugs.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßen Distanzkörper,
- Fig. 2: eine in ein Federbein eingebaute Vorrichtung zum Blockieren des Federbeins.

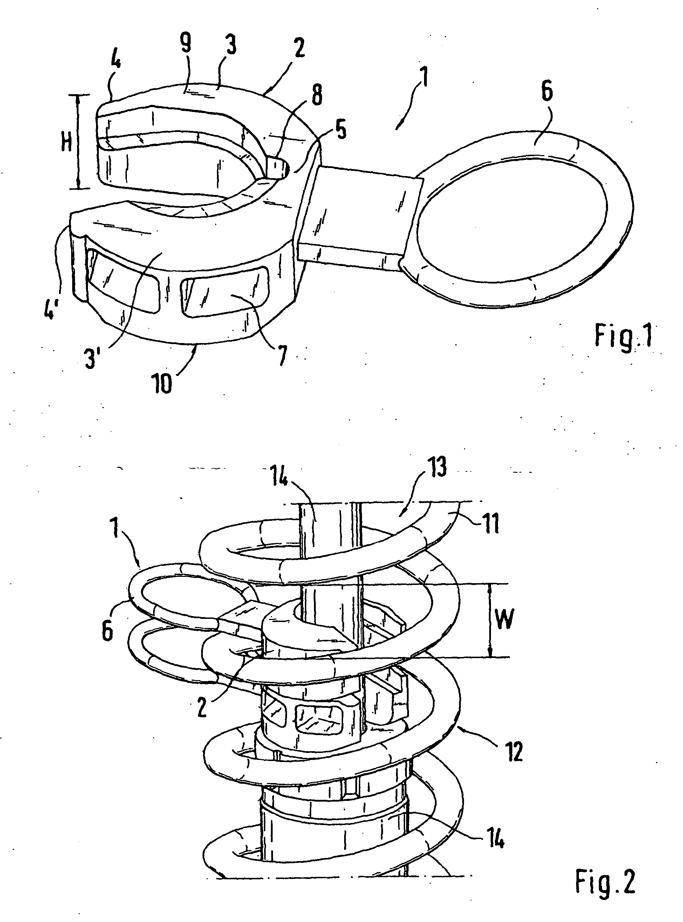

Entsprechend Fig. 1 weist ein erfindungsgemäßer Distanzkörper 1 einen C-förmig ausgebildeten Abschnitt 2 auf. Der C-förmige Abschnitt 2 ist dabei vorzugsweise so ausgebildet, dass dessen beiden C-Schenkel 3, 3' an deren freien Enden 4, 4' leicht aufeinander zu gerichtet sind. Dies ermöglicht ein Umgreifen einer zwischen die beiden C-Schenkel 3, 3' eingeführten Dämpfereinrichtung (vgl. Fig. 2) um mehr als 180°. Die beiden C-Schenkel 3, 3' sind über einen Verbindungsbereich 5 miteinander verbunden, wobei gemäß Fig. 1 an einer Außenseite des Verbindungsbereichs 5 ein Griffelement 6 angeordnet ist. Das Griffelement 6 ist hierbei beispielsweise als Ring bzw. als Reißlasche ausgebildet und vorzugsweise einstückig mit dem Distanzkörper 1 ausgeführt. Das Griffelement 6 kann im Bezug auf die Höhe H des Distanzkörpers 1 außermittig angeordnet sein, was eine Montage an einem Federbein 13 erleichtert. An einer Innenseite des Verbindungsbereichs 5 ist eine im wesentliche orthogonal zu den beiden C-Schenkeln 3 und 3' orientierte Kerbe 8 vorgesehen, welche dazu dient, die federnden Eigenschaften der beiden C-Schenkeln 3, 3' zu verbessern. Dabei können die beiden C-Schenkel 3, 3' umso leichter aufeinander zu bzw. voneinander weg bewegt werden, je tiefer die Kerbe 8 in den Verbindungsbereich 5 hineinragt. Desweiteren weist der Distanzkörper 1 außenseitige Ausnehmungen 7 auf, welche je nach Größe die Elastizität des Distanzkörpers 1 beeinflussen.

Prinzipiell ist der Distanzkörper 1 aus Kunststoff, insbesondere aus elastischem Kunststoff ausgebildet, und dadurch kostengünstig und in nahe zu jeder beliebigen Form einfach herstellbar. Gleichzeitig lässt sich dadurch über die Materialeigenschaften des Kunststoffes Einfluss auf dessen Elastizität nehmen.

Wie weiter aus Fig. 1 zu entnehmen ist, ist eine Oberseite 9 des Distanzkörpers 1 kegelstumpfartig ausgebildet und besitzt vorzugsweise eine zu einer Unterseite 10 des Distanzkörpers 1 komplementäre Form. Dies ermöglicht ein formschlüssiges Stapeln mehrerer Distanzkörper 1 übereinander (vgl. Fig. 2). Die Höhe H des Distanzkörpers 1 beträgt vorzugsweise ca. 20 bis 25mm und ist in jedem Fall kleiner als die lichte Weite W zwischen zwei Windungen 11 einer Schraubenfeder 12 des in Fig. 2 dargestellten Federbeins 13. Generell ist der Distanzkörper 1 Teil einer Vorrichtung zum Blockieren des Federbeins 13, wobei das Federbein 13 an einem nicht dargestellten Kraftfahrzeug angeordnet ist. Die Blockierung des Federbeins 13 wird dabei während des Transports des Kraftfahrzeugs benötigt.

Wie in Fig. 2 dargestellt ist, weist das Federbein 13 eine Dämpfereinrichtung 14 sowie die obengenannte Schraubenfeder 12 auf. Die Dämpfereinrichtung 14 kann dabei beispielsweise als Stoßdämpfer ausgebildet sein, während die Schraubenfeder 12 zwischen zwei nicht gezeigten Federntellern angeordnet ist und zumindest einen Teilbereich der Dämpfereinrichtung 14 umgreift bzw. umschließt. Die Dämpfereinrichtung 14 ist somit radial innerhalb der Schraubenfeder 12 angeordnet. Wie in Fig. 2 weiter gezeigt, sind zwei Distanzkörper 1 derart mit dem Axialabschnitt der Dämpfereinrichtung 14 verbunden, dass der C-förmige Abschnitt 2 des Distanzkörpers 1 diesen Axialabschnitt der Dämpfereinrichtung 14 umgreift. Das Griffelement 6 ragt bei am Federbein 13 angebrachter Vorrichtung radial nach außen durch die Schraubenfeder 12, so dass ein Entfernen bzw. Anbringen der Distanzkörper 1 einfach und problemlos möglich ist. Bei der Betrachtung der Fig. 2 wird auch klar, warum die Höhe H des Distanzkörpers 1 auf jeden Fall kleiner sein sollte als die lichte Weite W zwischen zwei Windungen 11 der Schraubenfeder 12, so dass der Distanzkörper 1 zwischen den Windungen 11 hindurch bewegt werden kann.

Durch die zueinander komplementäre Ausbildung der Oberseite 9 und der Unterseite 10 des Distanzkörpers 1 lassen sich einfach mehrere Distanzkörper 1 am Federbein 13 anordnen, wodurch die gewünschte Blockierung des Federbeins 13 erreicht werden kann.

Selbstverständlich ist auch denkbar, dass einzelne Distanzkörper 1 mit unterschiedlicher Höhe H unterschiedliche Farben aufweisen, wodurch eine schnell visuelle Kontrolle der richtig oder falsch zusammengestellten Vorrichtung zum Blockierungen des Federbeins 13 möglich ist.

## Patentansprüche

1. Vorrichtung zum Blockieren eines Federbeins (13) eines Kraftfahrzeugs zum Transport des Kraftfahrzeugs,
- wobei das Federbein (13) eine Dämpfereinrichtung (14) und eine Schraubenfeder (12) aufweist,
- wobei die Schraubenfeder (12) zwischen zwei Federtellern angeordnet ist und zumindest einen Axialabschnitt der Dämpfereinrichtung (14) umgreift,
- wobei die Vorrichtung einen Distanzkörper (1) aufweist, welcher im wesentlichen C-förmig ausgebildet ist und an der Dämpfereinrichtung (14) im Axialabschnitt diese umgreifend zwischen den beiden Federtellern anbringbar ist,
**dadurch gekennzeichnet, dass** die Vorrichtung ein am Distanzkörper (1) angeordnetes Griffelement (6) aufweist, welches bei am Federbein (13) angebrachter Vorrichtung radial nach außen durch die Schraubenfeder (12) ragt.

2. Vorrichtung nach Anspruch 1, **dadurch gekennzeichnet, dass** eine Höhe (H) des Distanzkörpers (1) kleiner ist als eine lichte Weite (W) zwischen zwei Windungen (11) der Schraubenfeder (12) in axialer Richtung derselben in Neutralstellung des Federbeins (13).

3. Vorrichtung nach Anspruch 1 oder 2, **dadurch gekennzeichnet, dass** das Griffelement (6) als Reißlasche ausgebildet ist.

4. Vorrichtung nach einem der Ansprüche 1 bis 3, **dadurch gekennzeichnet, dass** das Griffelement (6) außermittig angeordnet ist.

5. Vorrichtung nach einem der Ansprüche 2 bis 4, **dadurch gekennzeichnet, dass** die in axialer Richtung der Dämpfereinrichtung (14) gemessene Höhe (H) des Distanzkörpers (1) zwischen 20 und 25 mm liegt.

6. Vorrichtung nach einem der Ansprüche 1 bis 5, **dadurch gekennzeichnet, dass** der Distanzkörper (1) außenseitige Ausnehmungen (7) aufweist.

7. Vorrichtung nach einem der Ansprüche 1 bis 6, **dadurch gekennzeichnet, dass** der Distanzkörper (1) axial stapelbar ausgebildet ist, oder dass der Distanzkörper (1) formschlüssig stapelbar ist.

8. Vorrichtung nach einem der Ansprüche 1 bis 7, **dadurch gekennzeichnet, dass** der Distanzkörper (1) eine orthogonal zu den beiden C-Schenkeln (3, 3') orientierte und zwischen diesen angeordnete Kerbe (8) aufweist.

9. Vorrichtung nach einem der Ansprüche 1 bis 8, **dadurch gekennzeichnet, dass** der C-förmige Distanzkörper (1) so ausgebildet ist, dass er den Axialabschnitt der Dämpfereinrichtung (14) mehr als -180° umgreift.

## Claims

1. Device for blocking a suspension strut (13) of a motor vehicle for transportation of the motor vehicle,
- the suspension strut (13) having a damper device (14) and a helical spring (12),
- the helical spring (12) being arranged between two spring plates and embracing at least one axial section of the damper device (14),
- the device having a spacer body (1) which is of essentially C-shaped design and can be fitted between the two spring plates to the damper device (14) in a manner embracing the latter in the axial section,
**characterized in that** the device has a gripping element (6) which is arranged on the spacer body (1) and, when the device is fitted to the suspension strut (13), protrudes radially outward through the helical spring (12).

2. Device according to Claim 1, **characterized in that** a height (H) of the spacer body (1) is smaller than a clear width (W) between two turns (11) of the helical spring (12) in the axial direction of the same in the neutral position of the suspension strut (13).

3. Device according to Claim 1 or 2, **characterized in that** the gripping element (6) is designed as a tear-off tab.

4. Device according to one of Claims 1 to 3, **characterized in that** the gripping element (6) is arranged eccentrically.

5. Device according to one of Claims 2 to 4, **characterized in that** the height (H) of the spacer body (1), as measured in the axial direction of the damper device (14), is between 20 and 25 mm.

6. Device according to one of Claims 1 to 5, **characterized in that** the spacer body (1) has recesses (7) on the outside.

7. Device according to one of Claims 1 to 6, **characterized in that** the spacer body (1) is designed such that it can be stacked axially, or in that the spacer body (1) can be stacked in an interlocking manner.

8. Device according to one of Claims 1 to 7, **characterized in that** the spacer body (1) has a notch (8) which is oriented orthogonally to the two C-limbs (3, 3') and is arranged between them.

9. Device according to one of Claims 1 to 8, **characterized in that** the C-shaped spacer body (1) is designed in such a manner that it embraces the axial section of the damper device (14) by more than 180°.

## Revendications

1. Dispositif pour bloquer une jambe de suspension (13) d'un véhicule automobile pour le transport du véhicule automobile,
- la jambe de suspension (13) présentant un dispositif d'amortissement (14) et un ressort à boudin (12),
- le ressort à boudin (12) étant disposé entre deux coupelles de ressort et venant en prise autour d'au moins une portion axiale du dispositif d'amortissement (14),
- le dispositif présentant un corps d'espacement (1) qui est réalisé essentiellement en forme de C et qui peut être monté dans la portion axiale sur le dispositif d'amortissement (14) en s'engageant autour d'elle entre les deux coupelles de ressort,
**caractérisé en ce que** le dispositif présente un élément de préhension (6) disposé sur le corps d'espacement (1) qui, lorsque le dispositif est monté sur la jambe de suspension (13), pénètre radialement vers l'extérieur à travers le ressort à boudin (12).

2. Dispositif selon la revendication 1, **caractérisé en ce qu'**une hauteur (H) du corps d'espacement (1) est inférieure à une largeur intérieure (W) entre deux spires (11) du ressort à boudin (12) dans la direction axiale de celui-ci dans la position neutre de la jambe de suspension (13).

3. Dispositif selon la revendication 1 ou 2, **caractérisé en ce que** l'élément de préhension (6) est réalisé sous forme de patte d'arrachement.

4. Dispositif selon l'une quelconque des revendications 1 à 3, **caractérisé en ce que** l'élément de préhension (6) est disposé de manière excentrée.

5. Dispositif selon l'une quelconque des revendications 2 à 4, **caractérisé en ce que** la hauteur (H) du corps d'espacement (1), mesurée dans la direction axiale du dispositif d'amortissement (14), est comprise entre 20 et 25 mm.

6. Dispositif selon l'une quelconque des revendications 1 à 5, **caractérisé en ce que** le corps d'espacement (1) présente des évidements (7) du côté extérieur.

7. Dispositif selon l'une quelconque des revendications 1 à 6, **caractérisé en ce que** le corps d'espacement (1) est réalisé de manière empilable axialement, ou **en ce que** le corps d'espacement (1) peut être empilé par engagement par coopération de forme.

8. Dispositif selon l'une quelconque des revendications 1 à 7, **caractérisé en ce que** le corps d'espacement (1) présente une entaille (8) orientée perpendiculairement aux deux branches du C (3, 3') et disposée entre celles-ci.

9. Dispositif selon l'une quelconque des revendications 1 à 8, **caractérisé en ce que** le corps d'espacement (1) en forme de C est réalisé de telle sorte qu'il vienne en prise autour de la portion axiale du dispositif d'amortissement (14) sur plus de 180°.
